# EUROPEAN PATENT SPECIFICATION

(11) **EP 0 735 805 B1**
(45) Date of publication and mention of the grant of the patent: **10.03.1999**
(21) Application number: 95905812.4
(22) Date of filing: 16.12.1994
(51) Int. Cl.: H05H 1/00, B23K 10/00, H05H 1/26

(54) **PLASMA TORCH**
LICHTBOGENPLASMABRENNER
TORCHE A PLASMA

(30) Priority: 17.12.1993 RU 93056099
(43) Date of publication of application: 02.10.1996
(73) Proprietor: Plasma scorpion Schneiden und Schweissen Aktiengesellschaft, 52511 Geilenkirchen (DE)
(72) Inventor: Apunevich, Alexandr Ivanovich, Moscow, 125565 (RU); Titarenko, Evgeny Ivanovich, Zelenograd, 103617 (RU)
(74) Representative: Castell, Klaus, Dr.-Ing.
(86) International application number: PCT/RU94/00277
(87) International publication number: WO 95/17278

(56) References cited:
- EP-A- 0 426 289
- WO-A-94/19139
- US-A- 4 743 734
- US-A- 5 247 152

## Description

The present invention relates to electric-arc generators of low-temperature plasma, that is, to plasma-steam torches. The invention can find application in mechanical engineering, as well as in the motor, aircraft, electrical-engineering and other industries for performing diverse kinds of plasma treatment, such as cutting, welding, and heat-treatment of the surfaces of various materials.

More specifically the invention relates to those low-temperature plasma generators (plasmatrons) which make use of steam as the working medium.

### Background Art

Known in the prior art are plasma generators making use of steam as the working medium. In this case steam may be supplied to the generator from a special source or be produced immediately in the generator due to high temperatures therein. Besides, the steam generating process may be combined with heat withdrawal from the plasmatron electrodes.

A widespread technical solution to the problem of carrying out said process is admission of the liquid being evaporated through passages in the electrodes, said liquid evaporating while flowing along said passages, at the same time cooling the electrodes (PCT FI 88/00427: FR, A, 1,620,032).

The prior art closest to the herein-proposed solution is the construction of a plasma torch as taught in EP-A-0 640 426, cited under Article 54(3) EPC. The plasma torch comprises a housing which accommodates coaxially arranged a nozzle anode and a central rod-shaped cathode fitted in a holder encompassed with a cylinder made of a heat-conducting material and provided with tangential passages. Connected to the housing is a container for a liquid coolant, filled with a moisture absorbent that encompasses a porous tube forced onto the cathode holder.

When an arc is stricken across the electrodes, heat energy released thereby causes the liquid coolant to boil, and the resultant steam escapes through the tangential passages into the discharge chamber and further on, as a plasma jet, through a central axial port of the nozzle anode.

The torch discussed before suffers from a restricted electrode cooling abilities, that is, it fails to provide heat abstraction when the nozzle-anode-to-cathode distance exceeds 1.5 to 2 mm. At a larger distance the arc power and the amount of heat evolved on the electrodes increase so that cooling of the cathode becomes inadequate, whereby the cathode is liable to get destructed rapidly. On the other hand, restriction of the interelectrode distance to the aforesaid values reduces the working range of the torch power output.

### Disclosure of the Invention

The present invention has for its principal object to provide an electric arc plasma-steam torch featuring an efficient cooling of electrodes within an extended range of power output.

The foregoing object is accomplished due to the fact that in a plasma-steam torch, comprising a housing which accommodates, coaxially arranged, a nozzle anode, a rod-shaped cathode fastened in a holder, said housing being connected, through a pipe connector filled with a porous heat-conducting material, to a container for a working fluid, filled with a moisture absorbent that encompasses a tube made of a heat-conducting material, said tube having a flange with passages at its end facing the nozzle anode and accommodating said electrically insulated cathode holder, according to the invention, a sleeve is interposed between the tube flange and the nozzle anode, said sleeve being made of a heat-conducting material and having passages on its end surface facing the nozzle anode and on the outside cylindrical surface thereof.

### Brief Description of the Drawings

The essence of the present invention is illustrated by the accompanying drawings, wherein:

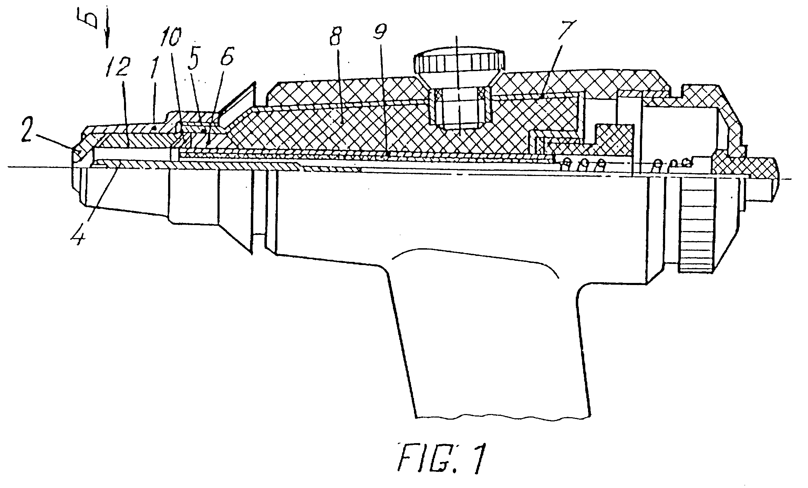

FIG.1 shows a schematic general view of the torch;

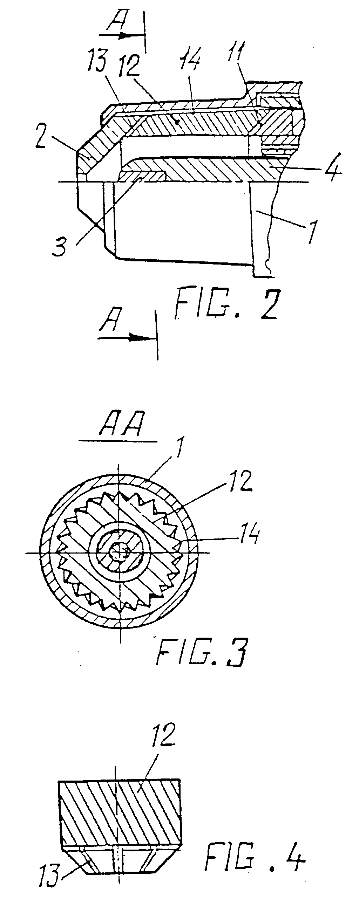

FIG.2 shows the torch housing;
FIG.3 is a section taken along the line AA in FIG.2; and
FIG.4 is a view of the sleeve on the arrow B.

### Best Embodiment of the Invention

The torch has a housing 1 accommodating coaxially arranged an exit nozzle anode 2 and a rod-shaped cathode 3 made fast in a holder 4. The housing 1 is connected, through a pipe connector 5 filled with a porous heat-conducting material 6, to a container 7 for the working fluid, said container being filled with a moisture absorbent 8 that encompasses a tube 9 made of a heat-conducting material and having a flange 10 at its side facing the nozzle anode 2, said flange 10 being provided with passages 11 made on its surface facing the nozzle anode 2, and which flange 10 is in contact with the porous material 6. The tube 9 encompasses said holder 4 of the cathode 3 and is electrically insulated therefrom. A sleeve 12 is interposed between the flange 10 and the nozzle anode 2, said sleeve 12 being made of a heat-conducting material and having passages 13 on its end surface facing the nozzle anode 2, and passages 14 on the outside cylindrical surface thereof.

The torch of the present invention operates as follows. The container 7 is filled with the working fluid (water) and a voltage is applied from a power source to the anode and cathode, thus initiating an electric arc thereacross. The energy evolved on the nozzle anode 2 and resultant from current flowing, heats it up and is admitted, through the sleeve 12, the flange 10, the porous material 6, and the tube 9, to pass to the water held in the container 7. Hence the water turns into steam, an excess pressure is built up under the effect of which steam is passed into the discharge chamber via the passages 11, 14, and 13. The steam flowing along the passages 11 cools the cathode 3, while the steam running along the passages 14 and 13 cools the nozzle anode 2.

A flow of steam in the discharge chamber constricts an electric-arc column between the anode and cathode, thus getting heated up to a high temperature and, while escaping through the nozzle port, builds up a plasma jet.

Two stages of steam supply through the passages are established in the proposed torch construction, viz, the stage of steam supply to the cathode 3 via the passages 10, and the stage of steam supply to the anode 2 through the passages 14 and 13 provided on the sleeve 12 incorporated into the torch construction.

### Industrial Applicability

The herein-proposed torch construction allows of optimizing the flow of steam for cooling the anode and cathode due to modified number, shape, and dimensions of the passages on the sleeve.

Apart from a higher degree of electrode cooling in the proposed torch, the steam that flows along the passages 10 stabilizes the arc column with the cathode in any position, thus enabling one to effect a wide range stepless control of the torch heat output power.

## Claims

1. A plasma-steam torch, comprising a housing (1) which accommodates, coaxially arranged, a nozzle anode (2) and a rod-shaped cathode (3) fastened in a holder (4), said housing being connected, through a pipe connector (5) filled with a porous heat-conducting material, to a container (7) filled with a moisture absorbent (8) that encompasses a tube (9) running therethrough and made of a heat-conducting material, said tube having a flange (10) at its end facing the nozzle anode, said flange being provided with passages (11) on the end surface on the side facing the nozzle anode, and said cathode holder being accommodated inside said tube and being electrically insulated therefrom, CHARACTERIZED in that a sleeve (12) is interposed between the nozzle anode (2) and said flange (10), said sleeve (12) being made of a heat-conducting material and having passages (13, 14) on its outside cylindrical surface and on the surface that contacts the nozzle anode (2).

## Patentansprüche

1. Plasmadampfbrenner, der ein Gehäuse (1) umfaßt, das eine schnabelförmige Anode (2) sowie eine stabförmige Kathode (3), die in einer Halterung (4) befestigt ist, koaxial angeordnet unterbringt, wobei das Gehäuse durch eine Rohrverbindung (5) hindurch, die mit einem wärmeleitenden porösen Stoff gefüllt ist, mit einem Behälter (7) verbunden ist, das mit einem Feuchtigkeitsabsorptionsmittel (8), das ein durch dieses durchlaufendes Rohr (9) umschließt und das aus wärmeleitendem Material besteht, gefüllt ist, wobei das Rohr einen Flansch (10) an seiner der schnabelförmigen Anode zugewendeten Stirnseite aufweist, wobei der Flansch mit Durchgängen (11) an der Stirnfläche an der der schnabelförmigen Anode zugewendeten Stirnseite versehen ist, und wobei die Kathodenhalterung im Inneren des Rohrs untergebracht ist und von ihm elektrisch isoliert ist, dadurch gekennzeichnet, daß eine Manschette (12) zwischen der schnabelförmigen Anode (2) und dem Flansch (10) eingefügt ist, wobei die Manschette (12) aus einem wärmeleitenden Material besteht und Durchgänge (13, 14) an seiner zylindrischen Außenfläche sowie an der Fläche, die die schnabelförmige Anode (2) berührt, aufweist.

## Revendications

1. Torche à plasma-vapeur, comportant un logement (1) dans lequel sont logées, coaxialement, une anode en forme d'ajutage (2) ainsi qu'une cathode (3) en forme de barreau assujettie dans un support (4), ledit logement étant relié, par l'intermédiaire d'un raccord tubulaire (5) fourré d'un matériau poreux thermoconducteur, à une cage (7) fourrée d'un produit absorbant l'humidité (8), laquelle enveloppe un tube (9) la traversant et fabriqué dans un matériau thermoconducteur, ledit tube présentant un rebord (10) à son extrémité faisant face à l'anode en forme d'ajutage, ledit rebord étant pourvu de passages (11) sur la surface d'extrémité située sur la face tournée vers l'anode, et ledit support de cathode étant logé à l'intérieur dudit tube et isolé électriquement de celui-ci, caractérisée en ce qu'un manchon (12) s'intercale entre l'anode en forme d'ajutage (2) et ledit rebord (10), ledit manchon (12) étant fait dans un matériau thermoconducteur et présentant des passages (13, 14) sur sa surface extérieure cylindrique ainsi que sur la surface qui vient au contact de l'anode en forme d'ajutage (2).
